# EUROPÄISCHE PATENTSCHRIFT

(11) **EP 2 461 459 B1**
(45) Veröffentlichungstag und Bekanntmachung des Hinweises auf die Patenterteilung: **03.05.2017**
(21) Anmeldenummer: 11191278.8
(22) Anmeldetag: 30.11.2011
(51) Int. Cl.: H02J 13/00, H02H 7/26

(54) **Kontrollsystem**
Control system
Système de contrôle

(30) Priorität: 01.12.2010 DE 102010060938
(43) Veröffentlichungstag der Anmeldung: 06.06.2012
(73) Patentinhaber: Technische Universität Dortmund, 44227 Dortmund (DE)
(72) Erfinder: Rehtanz, Christian, 44227 Dortmund (DE); Kleemann, Michael, 44139 Dortmund (DE)
(74) Vertreter: Bals, Rüdiger

(56) Entgegenhaltungen:
- EP-A1- 2 207 252
- EP-A1- 2 207 312
- WO-A2-2010/077830
- US-A1- 2009 254 655
- KLEEMANN M ET AL: "Concept and requirements of a simulator for substation automation systems", INNOVATIVE SMART GRID TECHNOLOGIES CONFERENCE EUROPE (ISGT EUROPE), 2010 IEEE PES, IEEE, PISCATAWAY, NJ, USA, 11. Oktober 2010 (2010-10-11), Seiten 1-6, XP031803789, ISBN: 978-1-4244-8508-6
- MOHAMED RAYEES A B S ED - MUHAMMAD SALMAN YOUSUF ET AL: "Substation Automation Techniques and Future Trends", INNOVATIONS IN INFORMATION TECHNOLOGY, 4TH INTERNATIONAL CONFERENCE ON, IEEE, PI, 18. November 2007 (2007-11-18), Seiten 412-416, XP031226537, ISBN: 978-1-4244-1840-4
- YI Y H ET AL: "A new-style centralized IED based on IEC 61850", POWER AND ENERGY SOCIETY GENERAL MEETING - CONVERSION AND DELIVERY OF ELECTRICAL ENERGY IN THE 21ST CENTURY, 2008 IEEE, IEEE, PISCATAWAY, NJ, USA, 20. Juli 2008 (2008-07-20), Seiten 1-5, XP031304259, ISBN: 978-1-4244-1905-0
- ANONYMOUS: 'Multi-Core / Mehrkern-Prozessoren', [Online] 27 Mai 2010, XP055246476 Gefunden im Internet: <URL:http://web.archive.org/web/20100527230 307/http://www.elektronik-kompendium.de/sit es/com/1203171.htm> [gefunden am 2016-02-01]
- ANONYMOUS: 'taskset', [Online] 30 April 2003, XP055247556 Gefunden im Internet: <URL:http://linuxcommand.org/man_pages/task set1.html> [gefunden am 2016-02-04]

## Beschreibung

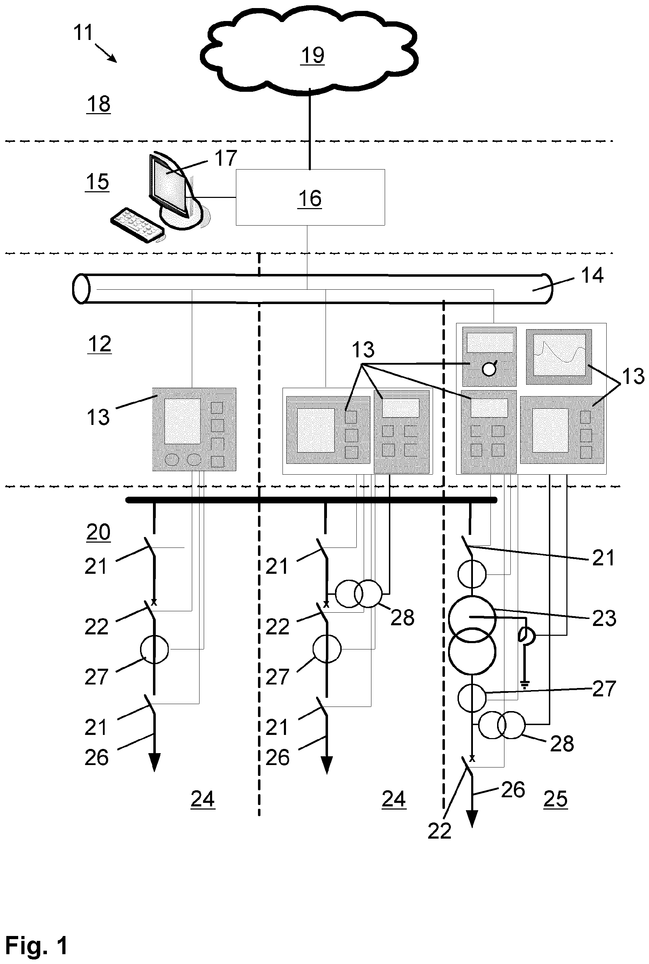

Die Erfindung betrifft ein Kontrollsystem, das mindestens als Schutzsystem einer Schaltanlage für ein elektrisches Energiesystem dient, wobei mit Hilfe des Kontrollsystems mehrere Schutzfunktionen für das elektrische Energiesystem ausführbar sind, um einen sicheren Betrieb des elektrischen Energiesystems zu gewährleisten, gemäß dem Oberbegriff des Anspruches 1. Die Erfindung betrifft ebenfalls ein Verfahren gemäß dem unabhängigen Anspruch 14. Schaltanlagen für Mittel-, Hoch- oder Höchstspannung eines elektrischen Energiesystems nach dem Stand der Technik weisen mehrere Schaltfelder, wie Abgangs- oder Transformatorfelder, für jeweils ein Leitersystem auf, wobei jedes Schaltfeld neben dem Leitersystem mit weiteren Übertragungsmitteln der elektrischen Leistung wie einem Schalter, einem Regler und/oder einem Transformator, ausgestattet ist. Ferner kann jedes Schaltfeld Strom- und/oder Spannungswandler aufweisen, wobei die Übertragungsmittel und die Strom- und Spannungswandler zusammenfassend im Folgenden als primärtechnische Mittel bezeichnet werden. Die primärtechnischen Mittel sind mit einem Kontrollsystem gekoppelt, das Kontrollfunktionen für das elektrische Energiesystem durchführt. Als Kontrollfunktion wird im Folgenden eine Überwachungs-, Steuer-, Regelungs- und/oder Schutzfunktion für das elektrische Energiesystem bezeichnet. Das Kontrollsystem nach dem Stand der Technik weist eine Vielzahl von Feldgeräten auf, wobei jedem Schaltfeld mindestens ein Feldgerät, in der Regel auch mehrere Feldgeräte zugeordnet sind. Das heißt, dass ein Feldgerät häufig nur Messwerte eines Schaltfeldes verarbeitet und nur ein Schaltfeld steuert, regelt, überwacht und/oder schützt. Eine derartige Schaltanlage ist auch in Figur 1 dargestellt.

Ein wesentliches Anforderungskriterium an die Feldgeräte ist, dass diese echtzeitfähig sind, wobei insbesondere Zeitfenster von Erfassen eines Messwertes des elektrischen Energiesystems bis zum automatischen Auslösen einer Veränderung bei den Übertragungsmitteln durch eine Schutzfunktion zum Schutz des elektrischen Energiesystems im Bereich von Millisekunden vorgesehen sind. Weiterhin werden hohe Anforderungen an die Sicherheit gestellt, mit der ein Schutz innerhalb des vorbestimmten Zeitfensters erreicht wird. Die Feldgeräte sind daher mit speziell von dem Hersteller entworfener Hardware ausgestattet, mit der die Echtzeitfähigkeit sicher gewährleistet werden soll. Hierbei werden speziell angefertigte Platinen mit je einem Mikroprozessor verwendet.

Die Programme mit den Algorithmen für die Kontrollfunktionen sind speziell auf die besonders angefertigte Hardware abgestimmt. Parameter, die z.B. Grenzwerte für Auslösung eines Schutzes sein können, müssen jedem einzelnen Feldgerät separat übergeben werden.

Durch die geringe Stückzahl im Bereich der Energietechnik führt eine solche speziell entwickelte Hardware mit speziell auf die Hardware abgestimmten Programmen zu einem hohen Preis pro Feldgerät, da die Entwicklungskosten nur auf wenige Feldgeräte umgelegt werden können.

Die Feldgeräte sind über einen Stationsbus mit einem Stationsrechner verbunden. Über den Stationsbus werden ausgewählte Signale einiger Feldgeräte zusammengefasst und verarbeitet. An dem Stationsrechner kann auch manuell in die Schaltanlage für nicht zeitkritische Steuerungen eingegriffen werden. Der Stationsrechner sendet und empfängt Daten einer Leitwarte.

An einer derartigen Schaltanlage ist unter anderem nachteilig, dass die Hardware kostenintensiv nur für die Energietechnik weiterentwickelt werden muss. Ein weiterer Nachteil ist darin zu sehen, dass bei einer Weiterentwicklung der Hardware eines Feldgerätes jeweils die damit eng abgestimmten Programme kostenintensiv erneuert und angepasst werden müssen. Wird ein Feldgerät in einer Schaltanlage erneuert, muss jedes Mal eine Parametrierung erneut durchgeführt werden. Durch die hohe Anzahl der Feldgeräte ist neben dem hohen Aufwand für die Parametrierung ein hoher Aufwand bei der Prüfung, Wartung und Austausch der einzelnen Feldgeräte notwendig. Muss ein Feldgerät gegen ein Feldgerät mit einer aktuelleren Hardware in einer bestehenden Schaltanlage ausgetauscht werden, so treten zudem in der Regel Anpassungsschwierigkeiten auf.

Ein weiteres Problem stellt die Ausfallsicherung dar. Der Ausfall eines Feldgerätes kann zum einen dadurch abgesichert werden, dass ein zweites identisches Feldgerät in der Anlage vorgesehen ist, das im Falle eines Ausfalls die Funktion des ausgefallenen Feldgerätes übernimmt, wodurch die ohnehin große Anzahl an Feldgeräten weiter erhöht wird. Eine weitere Möglichkeit der Ausfallsicherung kann dadurch erreicht werden, dass eine andere Schaltanlage bei einem Ausfall einer oder mehrere Feldgeräte zum Schutz des elektrischen Energiesystems eingesetzt werden muss, wodurch jedoch kein identischer Schutz erreicht werden kann.

Die Druckschrift DE 196 30 614 A1 offenbart eine Schaltanlage, bei der zur Erhöhung der Übertragungssicherheit neben einer ersten Busleitung zwischen den Feldgeräten und dem Stationsrechner mindestens eine weitere Busleitung, sei es je Schaltfeld oder schaltfeldübergreifend, vorgesehen ist. Hierdurch werden aber nicht die Nachteile, die sich aus der Art und Anzahl der Feldgeräte ergibt, beseitigt.

Die Druckschrift EP 2 207 252 A1 offenbart ein Kontrollsystem mit einer Kontrolleinheit, bei der über eine Virtualisierung Rechenleistung verteilt wird. Hierbei kann als Back-up Funktion auch eine Schutz-und/oder Kontrollfunktionalität von einer virtuellen Maschine beherbergt werden.

Es ist daher die Aufgabe der vorliegenden Erfindung, ein Kontrollsystem für eine Schaltanlage eines elektrischen Energiesystems bereitzustellen, bei dem Entwicklungs-, Produktions- und/oder Installationskosten verringert werden können und dennoch Echtzeitfähigkeit erreicht werden kann. Außerdem soll ebenfalls ein kostengünstiges Verfahren zur Gewährleistung eines sicheren Betriebes eines elektrischen Energiesystems bereitgestellt werden, bei dem echtzeitfähig Kontrollfunktionen ausgeführt werden können. Zur Lösung der Aufgabe wird ein Kontrollsystem mit allen Merkmalen des Anspruches 1 vorgeschlagen. Vorteilhafte Weiterbildungen des Kontrollsystems sind in den abhängigen Vorrichtungsansprüchen angegeben. Die Aufgabe wird weiterhin durch ein Verfahren mit den Merkmalen des unabhängigen Anspruches 14 gelöst. Merkmale und Details, die im Zusammenhang mit dem erfindungsgemäßen Kontrollsystem beschrieben sind, gelten dabei auch im Zusammenhang mit dem erfindungsgemäßen Verfahren und umgekehrt. Dabei können die in den Ansprüchen und in der Beschreibung erwähnten Merkmale jeweils einzeln für sich oder in Kombination erfindungswesentlich sein.

Erfindungsgemäß ist vorgesehen, dass das Kontrollsystem eine Kontrolleinheit aufweist, wobei die Kontrolleinheit eine Hardware mit zumindest zwei Rechenkernen zum Ausführen mindestens zweier Schutzfunktionen und mit mindestens einem Speicher aufweist und in dem Speicher mindestens ein Programm hinterlegt ist, mit dessen Hilfe die Schutzfunktionen echtzeitfähig ausführbar sind.

Das Kontrollsystem weist eine Kontrolleinheit auf, die mit mindestens zwei, in der Regel über drei, Rechenkernen ausgestattet ist, um durch die dadurch verbundene hohe Rechenleistung mehrere Feldgeräte ersetzen zu können. Anstelle mehrerer Feldgeräte ist in dem erfindungsgemäßen Kontrollsystem eine Kontrolleinheit vorgesehen. Hierdurch werden Kosten, u. a. Produktions- und Installationskosten, gespart.

Unter Rechenkernen, vom Fachmann auch Prozessorkerne genannt, werden im Folgenden Teile eines gemeinsamen Prozessors verstanden, die insbesondere parallel arbeiten und/oder echtzeitfähig arbeiten und in einem Gehäuse angeordnet sind. Die Kontrolleinheit kann einen Prozessor mit mehreren Rechenkernen oder mehrere Prozessoren jeweils mit mehreren Rechenkernen aufweisen. Die verschiedenen eingesetzten Prozessoren können unterschiedliche Anzahlen an Rechenkernen aufweisen. Die in dem erfindungsgemäßen Kontrollsystem eingesetzten Rechenkerne sind für einen größeren Markt außerhalb der Energietechnik entwickelt und hergestellt worden. Dieses kann ein Massenmarkt sein. Alternativ kann dieses ein spezieller Markt sein, der aber dennoch im Vergleich zu der Energietechnik größer ist und bei dem es sich beispielsweise um die Automatisierungstechnik handelt, sein.

Komponenten für einen größeren Markt als der Markt der Energietechnik, beispielsweise für einen Massenmarkt oder für die Automatisierungstechnik, werden im Folgenden als handelsüblich bezeichnet. Unter handelsüblich soll im Folgenden keine Komponente, insbesondere kein Teil einer Hardware, keine Hardware und/oder kein Programm verstanden werden, das speziell für die Energietechnik entwickelt wurde und/oder nur dort zum Einsatz kommt.

Bei den Rechenkernen kann es sich beispielsweise um handelsübliche Rechenkerne wie Allendale, Conroe, Merom, Kentsfield, Penryn, Wolfdale und/oder Yorkfield handeln. Auch der Prozessor kann handelsüblich sein und jede am Markt verfügbare Anzahl an Rechenkernen aufweisen. Es kann sich hierbei z. B. ein Doppelkernprozessor wie beispielsweise der Intel® Pentium Dual Core, ein Vierkernprozessor wie AMD® Phenon II X4 oder ein Achtkernprozessor wie IBM® POWER7 oder dergleichen handeln.

Auch die in der Kontrolleinheit verwendeten Speicher und Schnittstellen können handelsüblich sein. Es kann sein, dass die gesamte Hardware der Kontrolleinheit handelsüblich ist. Dadurch, dass die Rechenkerne und eventuell die gesamte Hardware der Kontrolleinheit handelsüblich sein können, können die Entwicklungskosten für eine spezielle Hardware im Bereich der Energietechnik eingespart. Eigens entwickelte Platinen entfallen ebenfalls.

Das verwendete Betriebssystem muss den Echtzeitanforderungen der Schaltanlage genügen und die Rechenkerne dabei so einsetzen, dass der Schutz des elektrischen Energiesystems gewährleistet wird. Als Betriebssystem ist beispielsweise ein Windows®-Betriebssystem für Industrieanwendungen, QNX® oder Windriver Vx-Works®, die jeweils Prozessoren mit mehreren Rechenkernen unterstützen, denkbar. Zusätzlich zu dem Betriebssystem kann die Kontrolleinheit mit einem Steuer-Programm ausgestattet sein, dass die Rechenleistung der Rechenkerne derart verwendet, dass die strengen Echtzeitbedingungen sicher eingehalten werden können. Hierzu kann das Betriebssystem um ein speicherprogrammierbares Steuerprogramm ergänzt werden. Überraschenderweise hat sich herausgestellt, dass ein für die Automatisierungstechnik entwickeltes Steuer-Programm der Firma Beckhoff Automation GmbH für die hier vorliegenden Echtzeitanforderungen geeignet ist.

Die Algorithmen der Schutzfunktionen, die durch die Kontrolleinheit ausgeführt werden, sind in wenigstens einem oder genau einem Algorithmus-Programm hinterlegt. Hierbei findet keine spezielle Anpassung an die Hardware statt. Das heißt, dass die Hardware der Kontrolleinheit vorzugsweise ausgetauscht werden kann, z. B. um eine leistungsfähigere, handelsübliche Hardware, insbesondere einen schnelleren Prozessor zu verwenden, wobei nur die Algorithmus-Programme auf der ausgetauschten Hardware neu installiert werden müssen. Hierbei können die Algorithmus-Programme unverändert bleiben. Leichte Anpassungen an ein weiterentwickeltes Steuer-Programm, ein weiterentwickeltes Betriebssystem oder eine weiterentwickelte Hardware, wie sie auch außerhalb der Energietechnik auftreten, sind hiervon ausgenommen, die in der Regel selbstständig abwärtskompatibel sind. Auch eine Änderung des Algorithmus-Programms kann ohne Eingriff in die Hardware der Kontrolleinheit erfolgen. Bei einer Implementierung des Algorithmus-Programms auf die Kontrolleinheit kann die Hardware unverändert bleiben. Durch die Hinterlegung der Kontrollfunktionen in den Algorithmus-Programmen und die dadurch erreichte leichte, im Wesentlichen unabhängige Austauschbarkeit der Hardware ergeben sich weitere Einsparungsmöglichkeiten im Bereich der Entwicklung und Installation des erfindungsgemäßen Kontrollsystems.

Die Algorithmus-Programme können sich hierbei erstmalig, insbesondere nach einem Standard aus der Fabrikautomatisierung, IEC61131-3, richten, um den Aufwand bei der Implementierung durch vereinfachte Programmierung zu reduzieren. Hierbei hat sich gezeigt, dass dieser Standard für den Einsatz in Schaltanlagen ausreichend ist.

Unter einem Programm wird ein Algorithmus-Programm, ein Betriebssystem und/oder ein Steuer-Programm verstanden.

Die Kontrolleinheit kann zumindest eine Messfunktion durchführen. Zu den Messfunktionen zählen Effektivwertbildung von Strom- und/oder Spannung, Berechnung von Wirk-, Blind- und/oder Scheinleistung pro Phase und/oder akkumuliert, Berechnung komplexer Impedanzen, Berechnung der Harmonischen, Berechnung von Flicker, Erfassen des Schalterabbilds und/oder Betriebsmittelmonitoring. Unter Strom, Spannung und Leistung sind hierbei - wie auch im Folgenden - elektrischer Strom, Spannung und Leistung zu verstehen.

Zu den Schutzfunktionen, die von der Kontrolleinheit durchgeführt werden können, können der unabhängiger Maximalstromzeitschutz, der abhängiger Maximalstromzeitschutz, der Distanzschutz, der Strom-Differentialschutz, der Über- und/oder Unterspannungsschutz, der Über- und/oder Unter-frequenzschutz, die rückwärtige Verriegelung, der Volt-pro-Hertz-Schutz, der Phasenvergleichsschutz, der Leistungsschalterversagerschutz, der thermischer Überlastschutz, die Wattmetrische Erdschluss-erfassung, der Erdschlusswischer, automatische Wiedereinschaltautomatiken, der Rückleistungs-schutz, die Phasenfolgeüberwachung, der Synchroncheck, die Stabilisierung über Harmonische und/oder Pendelsperre gehören.

Bei der Schaltanlage kann es sich insbesondere um eine Schaltanlage für Mittelspannung zwischen 3 und 30 kV, für Hochspannung zwischen 60 und 110 kV oder Höchstspannung zwischen 220 und 1.150 kV handeln.

Zusätzlich zu den Schutzfunktionen ist es denkbar, dass das Kontrollsystem, insbesondere die Kontrolleinheit, neben den Schutzfunktionen weitere Kontrollfunktionen wie mindestens eine Überwachungsfunktion, mindestens eine Steuerfunktion und/oder mindestens eine Regelungsfunktion übernimmt. Hierbei wird im Folgenden unter einer Kontrollfunktion eine Schutzfunktion, eine Überwachungsfunktion, eine Steuerfunktion oder eine Regelungsfunktion verstanden. Wird im Folgenden von Kontrollfunktionen gesprochen, können daher auch nur die in Patentanspruch 1 erwähnten mindestens zwei Schutzfunktionen gemeint sein.

Bei der Überwachungsfunktion, die insbesondere die Kontrolleinheit durchführt, können relevante Messwerte und/oder die Ergebnisse der Messfunktionen ausgewählt und für eine Bedienperson in der Schaltanlage und/oder der Leitwarte dargestellt werden. Zusätzlich oder alternativ können das Über- oder/und Unterschreiten von Grenzwerten der jeweiligen Messwerte und/oder Ergebnisse der Messfunktionen optisch und/oder akustisch dargestellt werden.

Zu den Steuerfunktionen, die insbesondere von oder anhand der Kontrolleinheit durchgeführt werden können, gehören verriegelte und unverriegelte manuelle Steuerung der Trenner und/oder Leistungsschalter, Schaltfeldvisualisierung, und/oder Schaltfolgeautomatiken. Hierbei kann es sein, dass eine manuelle Steuerung der Kontrolleinheit durch eine Bedienperson durch die Kontrolleinheit an die Übertragungsmittel weitergegeben wird, wobei zusätzliche automatische Befehle ergänzt werden können.

Zu den Regelungsfunktionen gehören z. B. Transformator-Spannungsregelung und/oder Blindleistungsregelung.

Die Algorithmen der Überwachungs-, Steuer- und Regelungsfunktionen können ebenfalls unabhängig von der Hardware in Algorithmus-Programmen hinterlegt werden. Die Überwachungs-, Steuer- und Regelungsfunktionen können - genau wie die Schutzfunktionen - auch auf handelsüblichen Rechenkernen, handelsüblichen Prozessoren und/oder mit einem handelsüblichen Betriebssystem, das mehrere Rechenkerne unterstützt, ausgeführt werden. Auch für die Überwachungs-, die nicht manuellen Steuer- und die Regelungsfunktionen muss die Echtzeitfähigkeit gewährleistet sein. Zum Einhalten der Echtzeitbedingungen für die Überwachungs-, Steuer- und Regelungsfunktionen kann ebenfalls ein Steuer-Programm eingesetzt werden, dass die Rechenleistung der Rechenkerne derart verwendet, dass diese Echtzeitbedingungen eingehalten werden können. Insbesondere können nur ein Betriebssystem und/oder nur ein Steuer-Programm für verschiedene, insbesondere alle, Kontrollfunktionen vorhanden sein. Hierbei kann es sich um ein oben erwähntes Steuer-Programm handeln. Auch die Algorithmus-Programme der Überwachungs-, Steuer- und Regelungsfunktionen können sich insbesondere nach einem Standard aus der Fabrikautomatisierung, IEC61131-3 richten. Die Überwachungs-, Steuer- und Regelungsfunktionen können die Ergebnisse der Messfunktionen übernehmen und weiterverwenden.

Die Kontrolleinheit kann eine Schnittstelle aufweisen, über die die Kontrolleinheit mit einer außerhalb der Schaltanlage liegenden Leitwarte verbunden ist und Daten und/oder Signale austauschen kann.

Die Kontrolleinheit kann die Funktion des Stationsrechners nach dem Stand der Technik wahrnehmen. Hierzu kann die Kontrolleinheit einen (Bedien-) Terminal aufweisen. Über die Kontrolleinheit kann somit manuell auf die Schaltanlage zugegriffen und eingegriffen werden.

Das erfindungsgemäße Kontrollsystem kann somit die Feldgeräte und den Stationsrechner ersetzen, wobei die Übertragungsmittel der elektrischen Leistung und dazugehörige Strom- und Spannungswandler, nicht verändert werden müssen. Damit lässt sich das erfindungsgemäße Kontrollsystem einfach in eine bzw. die bestehende Schaltanlage integrieren.

Vorzugsweise kann die Kontrolleinheit Kontrollfunktionen mehrerer Schaltfelder wahrnehmen. Es können mehrere Kontrolleinheiten vorhanden sein, die gemeinsam die Feldgeräte ersetzen. Insbesondere ist es jedoch vorgesehen, dass nur eine Kontrolleinheit in der Schaltanlage vorhanden ist. Es ist denkbar, dass nur eine Kontrolleinheit Kontrollfunktionen mehrerer, insbesondere aller, Schaltfelder der Schaltanlage wahrnimmt. Die Kontrolleinheit kann alle Kontrollfunktionen aller Schaltfelder der Schaltanlage wahrnehmen. Zusätzlich zu der Kontrolleinheit bzw. den Kontrolleinheiten können einzelne Feldgeräte in dem Kontrollsystem vorhanden sein, z. B. um Teile bereits aufgebauter Schaltanlagen in das erfindungsgemäße Kontrollsystem integrieren zu können oder um spezielle Funktionen einer externen Firma hinzuzukaufen und in das Kontrollsystem eingliedern zu können.

Es ist vorgesehen, dass jeder Kontrollfunktion ein oder mehrere Rechenkerne fest zugeordnet sind. Jeder einzelnen Kontrollfunktion ist mindestens ein eigener Rechenkern in der Kontrolleinheit fest zugeordnet. Bei einer Ausführung einer Kontrollfunktion auf mehreren Rechenkernen ist die Kontrollfunktion parallelisiert. Dadurch, dass ein oder mehrere Rechenkerne ausschließlich für eine Kontrollfunktion bestimmt sind, kann zur sicheren Echtzeitfähigkeit des Kontrollsystems beigetragen werden. Es werden Algorithmus-Programme der Kontrollfunktionen parallel auf jedem Rechenkern gleichzeitig ausgeführt. Je ein Algorithmus-Programm für eine Kontrollfunktion ist fortlaufend auf je einem Rechenkern ausgeführt. Wird durch ein Algorithmus-Programm die Notwendigkeit einer Veränderung der Übertragungsmittel zum Schutz des elektrischen Energiesystems erkannt, so kann von dem Algorithmus-Programm eine Änderung der Übertragungsmittel automatisch ausgelöst werden.

In einer bevorzugten Ausführungsform der Erfindung sind Parameter, die z. B. Grenzwerte oder Schwellwerte für eine Überwachungsfunktion und/oder Auslösung einer Schutzfunktion sein können, in dem Speicher der Kontrolleinheit gespeichert. Die Parameter für die Kontrollfunktionen der Schaltanlage können in dem Speicher der Kontrolleinheit zum Ausführen von mehreren Kontrollfunktionen zugänglich gespeichert sein. Bevorzugt sind alle Parameter aller Kontrollfunktionen der Schaltanlage in dem Speicher der Kontrolleinheit vorhanden, wobei die Parameter vorzugsweise zum Durchführen jeder Kontrollfunktion zur Verfügung stehen. Die Parameter können über eine Schnittstelle, an die ein externer Rechner anschließbar ist, der Kontrolleinheit übergeben werden. Sind mehrere Kontrolleinheiten vorhanden, so können alle Parameter, die für alle Kontrollfunktionen der jeweiligen Kontrolleinheit relevant sind, in dem Speicher der jeweiligen Kontrolleinheit gespeichert sein und für jede Kontrollfunktion der jeweiligen Kontrolleinheit zur Verfügung stehen. Bevorzugt verfügt auch in diesem Fall jede Kontrolleinheit über alle Parameter der Schaltanlage.

Die Kontrolleinheit kann einen Zwischenspeicher aufweisen, der insbesondere als Ringspeicher ausgebildet ist. An die Kontrolleinheit übertragene Messwerte können in dem Zwischenspeicher zwischengespeichert werden, wobei insbesondere die im Zwischenspeicher gespeicherten Werte zur Durchführung verschiedener, insbesondere aller, Kontrollfunktionen zur Verfügung stehen. Zur Durchführung verschiedener, insbesondere jeder, Kontrollfunktion in der Kontrolleinheit ist ein Zugriff auf den Zwischenspeicher möglich. Zu den Messwerten gehören beispielsweise Strom- und Spannungswerte, Schalterstellungen von Trennern und/oder Leistungsschaltern, Druckwerte, Temperaturwerte und/oder Spannung der Federspeicher der Schaltgeräte der einzelnen Schaltfelder. Hierbei können die Messwerte in Zeitscheiben gespeichert sein. Zur Durchführung von Kontrollfunktionen können neben den Messwerten auch vorverarbeitete Werte, zu denen auch die Ergebnisse der Messfunktionen gehören, verwendet werden. Die vorverarbeiteten Werte können zur Durchführung aller weiteren Kontrollfunktionen allgemein zugänglich gemacht werden. Das Kontrollsystem weist mindestens einen Prozesskoppler auf. Insbesondere kann jedem Schaltfeld der Schaltanlage mindestens ein Prozesskoppler zugeordnet sein. In einer besonders bevorzugten Ausführungsform ist jedem Schaltfeld genau ein Prozesskoppler zugeordnet.

Der Prozesskoppler dient mindestens zu einer Messwertumwandlung, bei der Messwerte des Schaltfeldes gemessen und digitalisiert werden. Hierzu weist der Prozesskoppler mindestens einen Eingang auf. Insbesondere ist es vorgesehen, dass der mindestens eine Eingang des Prozesskopplers den Strom- und Spannungsverhältnisse der Schaltanlage angepasst ist. Der mindestens eine Eingang des Prozesskopplers kann aus folgender Gruppe ausgewählt sein: mindestens ein Zeitgeber, mindestens ein Strommesser, mindestens ein Spannungsmesser, mindestens ein analoger Eingang zur Erfassung von analogen Signalen, z. B. von Messumformern, wie Druck-, Temperaturmessern oder Messer der Spannungen der Federspeicher, und/oder mindestens ein binärer Eingang zur Erfassung von diskreten Zuständen, insbesondere Schalterstellungen. Insbesondere können auch mehrere Eingänge und gegebenenfalls auch mehrere Eingänge derselben Art vorhanden sein.

Insbesondere kann vorgesehen sein, dass der Zeitgeber die Uhrzeit mit einer Genauigkeit von wenigen Mikrosekunden erfasst, z. B. durch IRIG-B oder durch einen Zeitserver des Kontrollsystems außerhalb des Prozesskopplers, von dem aus die Uhrzeit an den Prozesskoppler weitergeleitet wird. Ist eine Genauigkeit von unter 1 Mikrosekunde notwendig, so kann der Prozesskoppler die Zeit über das Global-Positioning-System (GPS) oder den Sender DCF 77 beziehen. Der Strommesser kann so ausgelegt sein, dass der Strommesser Ströme mit einem Normpegel zwischen 1 bis 5 Ampere messen kann, wobei zur Erfassung von Kurzschlüssen kurzzeitig Ströme von bis zu 100 A verarbeitet werden können, ohne dass der Strommesser beschädigt wird. Der Spannungsmesser kann so ausgelegt sein, dass der Spannungsmesser der Spannungen zwischen 1 und 150 V messen kann. In dem analogen Eingang können typische Pegel von 0 bis 20 mA, und/oder 0 bis 10 V erfasst werden. Der binäre Eingang kann Spannungen zwischen 24 und 220 V Wechselspannung und/oder 24 bis 230 V Gleichspannung verarbeiten. Der mindestens eine Eingang kann durch einen in den Prozesskoppler integrierten Messwandler und/oder Messumformer an die Strom- und Spannungsverhältnisse angepasst sein. Alternativ kann es sein, dass ein externer Messwandler und/oder Messumformer verwendet wird.

Der Prozesskoppler kann einen Anti-Alias-Filter aufweisen, der in Abhängigkeit von der Abtastrate die maximalen Frequenzen der Eingangssignale begrenzt.

Der Prozesskoppler kann zusätzlich dazu dienen, Signale an die Übertragungsmittel zu senden. Hierzu weist der Prozesskoppler mindestens einen Ausgang auf. Der mindestens eine Ausgang kann aus folgender Gruppe ausgewählt sein: mindestens ein analoger Ausgang für Ströme zwischen 0 und 20 mA und/oder Spannungen zwischen 0 und 10 V und/oder mindestens ein binärer Ausgang, der zwischen 0 und 400 V Wechsel- oder Gleichspannung verarbeiten kann. Der binäre Ausgang kann als potentialfreier, elektromechanischer oder transistorgesteuerter Kontakt ausgeführt sein. Über den binären Ausgang können insbesondere Kommandos an Schalter versendet werden. Es können mehrere Ausgänge und gegebenenfalls mehrere Ausgänge derselben Art vorgesehen sein. Der mindestens eine Ausgang und/oder der mindestens eine Eingang des Prozesskopplers können an die Strom- und Spannungsverhältnisse der Schaltanlage, insbesondere über einen Messwandler und/oder einen Messumformer, angepasst sein.

Der Prozesskoppler kann im jeweiligen Schaltfeld der Anlage positioniert sein. Um die elektromagnetische Verträglichkeit zu gewährleisten, kann mindestens eine Abschirmmaßnahme für den Prozesskoppler vorgesehen sein, z. B. ein Metallgehäuse.

In der Erfindung ist die Kontrolleinheit mit dem Prozesskoppler über ein digitales, echtzeitfähiges Bussystem verbunden. Hierbei kann es sich insbesondere um EtherCAT oder über einen ethernet-basierten Prozessbus, z. B. einen ethernet-basierten Feldbus gemäß IEC61850-9-2, handeln. Bevorzugt wird EtherCAT verwendet, um den Echtzeit-anforderungen sicher zu genügen. Als Leiter im Bussystem können geschirmte mehradrige Kupferleitungen, Lichtwellenleiter, entweder im Multi-mode oder im Single-mode oder Hohlleiter dienen. Sind mehrere Prozesskoppler und/oder Kontrolleinheiten vorhanden, so sind insbesondere alle Prozesskoppler und/oder Kontrolleinheiten an dasselbe Bussystem angeschlossen. Insbesondere kann vorgesehen sein, dass das Kontrollsystem eine Kontrolleinheit und je einen Prozesskoppler pro Schaltfeld aufweist, die alle über ein gemeinsames Bussystem verbunden sind. Ein optionales Feldgerät und/oder ein Zeitserver können ebenfalls an das Bussystem angeschlossen sein. Die an das Bussystem angeschlossenen Geräte, wie Kontrolleinheiten, Prozesskoppler, Feldgeräte und Zeitserver, können mit entsprechenden, handelsüblichen Schnittstellen versehen sein.

Es ist denkbar, genau ein Bussystem zwischen dem Prozesskoppler und der Kontrolleinheit zu verwenden. Es ist ebenfalls denkbar, dass der Prozesskoppler und die Kontrolleinheit über mehrere Bussysteme verbunden sind. Hierbei ist insbesondere ein ringförmiges Bussystem denkbar. Bei dem ringförmigen Bussystem können die mindestens eine Kontrolleinheit und dermindestens eine Prozesskoppler, insbesondere die Kontrolleinheiten und/oder die Prozesskoppler, ringförmig verbunden sind. Wird an einer Stelle die Leitung über den Ringbus unterbrochen, so ist dennoch ein Datenaustausch zwischen der Kontrolleinheit/den Kontrolleinheiten und dem Prozesskoppler/den Prozesskopplern und/oder zwischen den Prozesskopplern untereinander und/oder den Kontrolleinheiten untereinander möglich. Alternativ oder zusätzlich kann ein zweites Bussystem parallel zu dem gesamten ersten Bussystem oder zu Teilen des ersten Bussystems angeordnet sein. Das zweite Bussystem kann vorgesehen sein, um im Normalbetrieb Daten zu übertragen. Alternativ kann das zweite Bussystem redundant vorhanden sein, um bei einem Ausfall des ersten Bussystems die Datenübertragung zu gewährleisten. Allgemein gesprochen, kann insbesondere ein Bussystem der mehreren Bussysteme redundant vorhanden sein. Die Leiter und/oder die Protokolle der verschiedenen Bussysteme können gleich oder unterschiedlich ausgeführt sein.

Zusätzlich zur Messwertumwandlung kann der Prozesskoppler dazu dienen, die Messwerte zu erfassen, wobei die Messwerte mit einem Zeitstempel versehen werden. Hierbei kann der Prozesskoppler die Messwerte an den Eingängen abtasten und die Messwerte der aktuellen Uhrzeit, die vom Zeitgeber zur Verfügung gestellt wird, zuordnen. Die Abtastraten können größer als 1 kHz gewählt werden.

Optional kann vorgesehen sein, dass es dem Prozesskoppler möglich ist, mindestens eine Kontrollfunktion, insbesondere eine Schutz- und/oder Regelungsfunktion, und/oder Messfunktion, insbesondere für das zugeordnete Schaltfeld, auszuführen. Insbesondere kann es sich hierbei um mindestens eine Kontroll- und/oder Messfunktion des Schaltfeldes, das dem Prozesskoppler zugeordnet ist, handeln. Bei der Kontroll- und/oder Messfunktion kann es sich um eine bereits oben aufgeführte Funktion handeln. Beispielsweise kann über eine Fast-Fourier-Transformation in dem Prozesskoppler der Effektivwert des Stromes berechnet werden. Auch kann zusätzlich oder alternativ ein Phasenwinkel im Prozesskoppler bestimmt werden. Hierzu ist ein genauer Zeitgeber nötig, wozu der Prozesskoppler z. B. Daten des Global-Postioning-Systems (GPS) oder vom Sender DCF 77 empfangen kann.

Der Prozesskoppler kann mindestens einen Rechenkern und einen Speicher aufweisen. In dem Speicher kann ein echtzeitfähiges Programm für die Messwerterfassung und/oder die Ausführung der Kontroll- und/oder Messfunktion hinterlegt sein. Für die Messwerterfassung und/oder die Ausführung der Kontroll- und/oder Messfunktion durch den Prozesskoppler ist es insbesondere denkbar, dass der Prozesskoppler mindestens einen handelsüblichen Rechenkern und einen handelsüblichen Speicher aufweist. Abgesehen von den Ein- und/oder Ausgang und/oder der Abschirmungsmaßnahme kann der Prozesskoppler ebenfalls wie auch die Kontrolleinheit aus handelsüblicher Hardware aufgebaut sein. Insbesondere kann hier ebenfalls Hardware aus der Automatisierungstechnik Verwendung finden. In dem handelsüblichen Speicher können Programme für die Messwerterfassung und/oder für die Ausführung der Kontroll- und/oder Messfunktion hinterlegt sein. Hierzu können ebenfalls ein handelsübliches Betriebssystem und ein echtzeitfähiges Steuerprogramm, wie oben bereits erwähnt und wie z. B. ein Speicherprogrammierbares-Steuerprogramm, vorgesehen sein. Wie bei der Kontrolleinheit können auch beim Prozesskoppler die Messwerterfassung und/oder die Ausführung der Kontroll- und/oder Messfunktion nur in Algorithmus-Programmen hinterlegt sein. Das heißt, die handelsübliche Hardware kann unabhängig von den Algorithmus-Programmen ausgetauscht werden. Die Algorithmus-Programme können sich hierbei insbesondere nach einem Standard aus der Fabrikautomatisierung, IEC61131-3, richten. Bei einem externen Messwandler und/oder Messumformer können auch die Ein- und/oder Ausgänge des Prozesskopplers handelsüblich sein. Ein Algorithmus-Programm einer Kontrollfunktion des Prozesskopplers und ein Algorithmus-Programm derselben Kontrollfunktion der Kontrolleinheit können beispielsweise im Wesentlichen identisch sein.

In dem Speicher der Kontrolleinheit und/oder des Prozesskopplers kann eine Softwarespeicherprogrammierbare Steuerung hinterlegt sein.

Der Prozesskoppler kann über die Kontrolleinheit parametrierbar sein. Der Prozesskoppler kann beispielsweise vollständig über die Kontrolleinheit parametrierbar sein. Hierbei versendet die Kontrolleinheit die Parameter über das Bussystem. Der Prozesskoppler kann alle Parameter der Schaltanlage speichern. Alternativ ist es denkbar, dass der Prozesskoppler nur die Parameter für das ihm zugeordnete Schaltfeld speichert. Die Parametrierung des Prozesskopplers kann gleichzeitig mit der Kontrolleinheit erfolgen. Das heißt, eine Bedienperson übergibt z.B. manuell oder automatisch die Parameter der Kontrolleinheit, wobei die Parameter über das Bussystem zu dem Prozesskoppler gelangen. Eine direkte Parametrierung des Prozesskopplers durch die Bedienperson ist nicht notwendig.

In einer bevorzugten Ausführungsform der Erfindung werden in einem Normalbetrieb die Mess- und Kontrollfunktionen, insbesondere alle Mess- und Kontrollfunktionen, durch die Kontrolleinheit ausgeführt. Hierbei wird als Normalbetrieb der Zustand der Schaltanlage bezeichnet, bei dem das Bussystem eine genügend hohe Bandbreite zur Übertragung aller Messwerte hat und die Kontrolleinheit und das Bussystem störungsfrei arbeiten. In dieser Ausführungsform übernimmt der Prozesskoppler eine Ausführung einer Mess- und/oder Kontrollfunktion nur dann, wenn eine Beeinträchtigung des Bussystems und/oder der Kontrolleinheit vorliegt. Hierbei beinhaltet eine Beeinträchtigung des Bussystems eine Reduzierung der Bandbreite oder ein Ausfall des Bussystems. Insbesondere um eine Beeinträchtigung erkennen zu können, kann in dem Prozesskoppler eine Detektierfunktion gespeichert sein, die eine Beeinträchtigung des Bussystems und/oder der Kontrolleinheit überwacht. Bei einer Beeinträchtigung des Bussystems und/oder der Kontrolleinheit kann der Prozesskoppler die Kontroll- und/oder Messfunktion selber ausführen.

In einer alternativen Ausführungsform der Erfindung werden auch in einem Normalbetrieb Mess- und/oder Kontrollfunktionen von dem Prozesskoppler ausgeführt. Hierbei ist insbesondere denkbar, dass der Prozesskoppler Fast-Fourier-Transformationen durchführt. Hierdurch kann die an die Kontrolleinheit zu übertragene Datenmenge erheblich reduziert werden. Bei der Ausführung der Kontrollfunktion in der Kontrolleinheit können diese von dem Prozesskoppler vorverarbeiteten Werte Verwendung finden.

Es kann insbesondere vorgesehen sein, dass in der Kontrolleinheit zur Durchführung der Schutz- und/oder einer Regelungsfunktion Messwerte aus dem Zwischenspeicher und/oder in dem Prozesskoppler und/oder der Kontrolleinheit vorverarbeitete Werte Eingang finden.

Als weitere Maßnahme, um die Ausfallsicherheit zu erhöhen, kann es vorgesehen sein, dass das Kontrollsystem mindestens eine Redundanzeinheit aufweist. Die Redundanzeinheit ist dafür vorgesehen, den Betrieb der Kontrolleinheit zu überwachen und, wenn die Kontrolleinheit ausfällt, zumindest teilweise die Aufgaben der Kontrolleinheit zu übernehmen. Insbesondere ist vorgesehen, dass die Redundanzeinheit alle Aufgaben der Kontrolleinheit bei einem Ausfall der Kontrolleinheit wahrnimmt. Die Redundanzeinheit kann im Wesentlichen funktional identisch, insbesondere baugleich, zur Kontrolleinheit sein. Die Kontrolleinheit und die Redundanzeinheit können über das Bussystem verbunden sein. Alternativ oder zusätzlich können die Redundanzeinheit und die Kontrolleinheit über einen dezidierten Kommunikationsbus oder direkt verdrahtete Einzeladern miteinander verbunden sein. Es können auch mehrere Redundanzeinheiten vorhanden sein.

Die Aufgabe wird ebenfalls gelöst durch ein Verfahren zur Gewährleistung eines sicheren Betriebes eines elektrischen Energiesystems, wobei mehrere Schutzfunktionen für das elektrische Energiesystem durch ein Kontrollsystem einer Schaltanlage ausführbar sind, wobei mindestens zwei Schutzfunktionen auf mindestens zwei Rechenkernen einer Kontrolleinheit des Kontrollsystems mit Hilfe mindestens eines auf der Kontrolleinheit hinterlegten Programmes echtzeitfähig ausführbar sind. Das Verfahren kann mit Hilfe eines Schutzsystems nach einem der Ansprüche 1 bis 13 durchgeführt werden. Das Verfahren wird mit einem Schutzsystem durchgeführt, bei dem im Normalbetrieb je ein Algorithmus-Programm je einer Kontrollfunktion parallel und fortlaufend auf je einem Rechenkern durchgeführt wird.

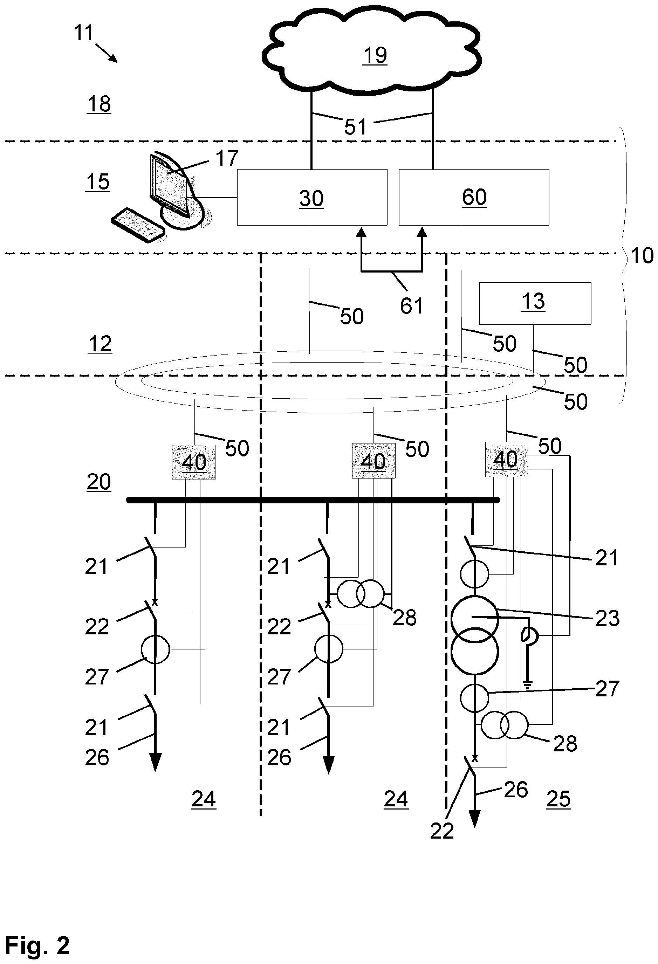

Weitere, die Erfindung verbessernde Maßnahmen ergeben sich aus der nachfolgenden Beschreibung zu dem Ausführungsbeispiel der Erfindung, welche in den Figuren 2 bis 4 schematisch dargestellt ist. Sämtliche aus den Ansprüchen, der Beschreibung oder der Zeichnung hervorgehende Merkmale und/oder Vorteile, einschließlich konstruktiver Einzelheiten, räumlicher Anordnung und Verfahrensschritte, können sowohl für sich als auch in den verschiedensten Kombinationen erfindungswesentlich sein. Es zeigen:
- Fig. 1: eine schematische Darstellung einer Schaltanlage nach dem Stand der Technik,
- Fig. 2: eine schematische Darstellung einer Schaltanlage mit einem erfindungsgemäßen Kontrollsystem,
- Fig. 3: einen schematischen Aufbau einer Kontrolleinheit des erfindungsgemäßen Kontrollsystems und
- Fig. 4: einen schematischen Aufbau eines Prozesskopplers des erfindungsgemäßen Kontrollsystems.

Elemente mit gleicher Funktion und Wirkungsweise sind in den Figuren 1 bis 4 mit denselben Bezugszeichen versehen.

In Fig. 1 ist eine Schaltanlage 11 nach dem Stand der Technik schematisch dargestellt. Die Schaltanlage 11 ist dabei in drei Ebenen unterteilt: eine Prozessebene 20, eine Feldebene 12 und eine Stationsebene 15. In der Prozessebene 20 befinden sich die Übertragungsmittel 21, 22, 23, 26 der elektrischen Leistung wie Schalter 21, 22, die als Trenner 21 oder Leistungsschalter 22 ausgebildet sind, Leitersysteme 26 und ein Transformator 23. Hierbei ist die Prozessebene 20 beispielhaft in drei Schaltfelder 24, 25 unterteilt, und zwar in zwei Abgangsfelder 24 und ein Transformatorfeld 25. In den Schaltfeldern 24, 25 sind Stromwandler 27 und Spannungswandler 28 angeordnet, die die Stromstärke und/oder Spannungsstärke auf der Seite von Feldgeräten 13 verringern und damit leichter messbar machen.

Die Schalter 21, 22 und der Transformator 23 sind jeweils einzeln mit einem Feldgerät 13 verbunden. Hierbei ist jedem Schaltfeld 24, 25 mindestens ein Feldgerät 13 zugeteilt. In der Schaltanlage 11 der Fig. 1 sind beispielhaft bis zu vier Feldgeräte 13 pro Schaltfeld 24, 25 vorgesehen. Die Feldgeräte 13 übernehmen die Kontrollfunktionen für das jeweilige Schaltfeld 24, 25. Die Feldgeräte 13 sind teilweise mit einem Bus 14 verbunden, durch den auch Signale an einen Stationsrechner 16 der Stationsebene 15 übermittelt werden. Der Stationsrechner 16 kann mit einer Netzleitebene 18, insbesondere mit einer Leitwarte 19, kommunizieren. Der Stationsrechner 16 weist einen (Bedien-)Terminal 17 auf, an dem manuell in die Schaltanlage 11 eingegriffen werden kann.

In Fig. 2 ist ein erfindungsgemäßes Kontrollsystem 10 einer Schaltanlage 11 mit zu Fig. 1 identischen Übertragungsmitteln 21, 22, 23, 26, die ebenfalls in drei Schaltfelder 24, 25 unterteilt sind und dazugehörigen Strom- und Spannungswandlern 27, 28, dargestellt.

Das erfindungsgemäße Kontrollsystem 10 weist eine Kontrolleinheit 30, einen Prozesskoppler 40 für jedes Schaltfeld 24, 25, ein ringförmiges Bussystem 50 und eine Redundanzeinheit 60 auf. Die Kontrolleinheit 30, die Redundanzeinheit 60 und die Prozesskoppler 40 sind über das Bussystem 50 miteinander verbunden. Die Redundanzeinheit 60 ist im Wesentlichen identisch zur Kontrolleinheit 30 und mit der Kontrolleinheit 30 über Einzeladern 61 verbunden. Die Redundanzeinheit 60 liest die in die aus der Kontrolleinheit 30 eingehenden und ausgehenden Daten in Echtzeit mit. Die Redundanzeinheit 60 kann einen Ausfall der Kontrolleinheit 30 detektieren und übernimmt in diesem Fall deren Funktionen. Die Kontrolleinheit 30 und die Redundanzeinheit 60 sind jeweils über eine Kommunikationsleitung 51 mit der Netzleitebene 18, insbesondere mit der Leitwarte 19, verbunden. Die Kontrolleinheit 30 weist einen (Bedien-)Terminal 17 zum manuellen Eingriff in die Schaltanlage 11 auf.

Erfindungsgemäß übernimmt die Kontrolleinheit 30 die Aufgaben der Feldgeräte 13. Das heißt, dass die Kontrolleinheit 40 im Normalbetrieb im Wesentlichen alle Kontrollfunktionen 82, 83, 84, 85 durchführt. Hierdurch entfällt im Wesentlichen die Feldebene 12. Optional können jedoch Feldgeräte 13 an das Bussystem 50 angeschlossen und in das erfindungsgemäße Kontrollsystem 10 integriert werden. Hierbei ist in Fig. 2 ein optionales Feldgerät 13 beispielsweise dargestellt.

Die Prozesskoppler 40 dienen im Normalbetrieb zumindest dazu, die von den Übertragungsmitteln 21, 22, 23 und den Strom- und Spannungswandlern 27, 28 eingehende Messwerte zu digitalisieren. Bei einer Beeinträchtigung des Bussystems 50 oder der Kontrolleinheit 30 übernehmen die Prozesskoppler 40 die Messfunktionen 81 und/oder die Kontrollfunktionen der Kontrolleinheit 30.

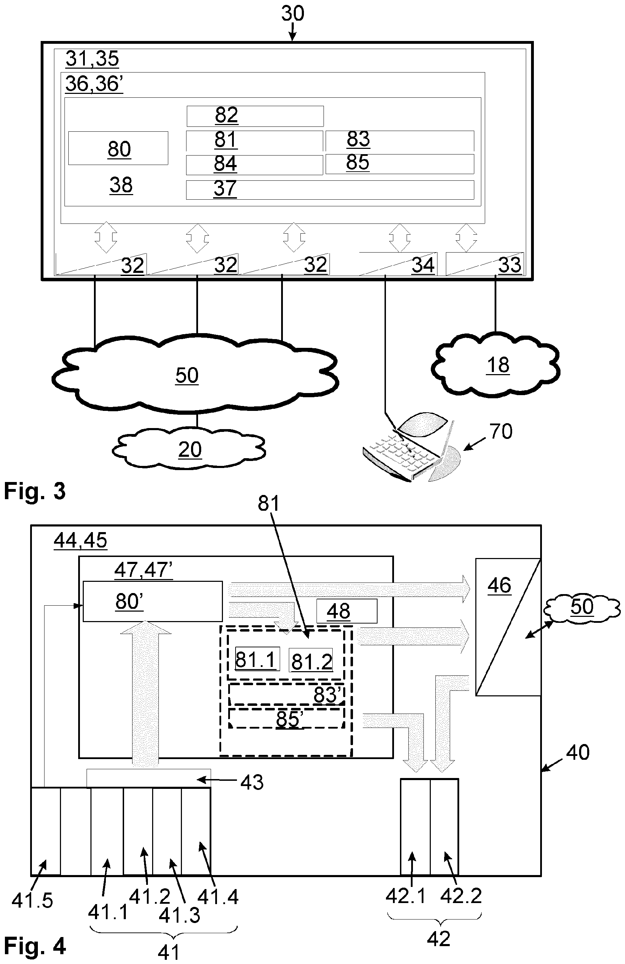

In Fig. 3 ist eine Kontrolleinheit 30 des erfindungsgemäßen Kontrollsystems 10 schematisch dargestellt. Die Kontrolleinheit 30 weist eine handelsübliche Hardware 31, 32, 33, 34, 35 mit handelsüblichen Rechenkernen 31, Speicher 35 und Schnittstellen 32, 33, 34 auf, die derart miteinander verbunden sind und zusammenarbeiten, dass die jeweiligen Kontrollfunktionen parallel und echtzeitfähig ablaufen können. Über erste Schnittstellen 32 ist die Kontrolleinheit 32 an das Bussystem 50 und damit indirekt an die Prozessebene 20 verbunden. Eine zweite Schnittstelle 33 führt zur Netzleitebene 18. Über eine dritte Schnittstelle 34 kann die Kontrolleinheit 30 an einen Rechner 70 einer Bedienperson angeschlossen werden. Hierüber können der Kontrolleinheit 30 beispielsweise Parameter 37 übermittelt werden. Die Kontrolleinheit speichert die Parameter 37.

Auf der Hardware 31, 32, 33, 34, 35 ist ein handelsübliches Betriebssystem 36 und ein echtzeitfähiges Steuerprogramm 36' installiert. Dieses kann optional ein speicherprogrammierbares Steuerungsprogramm sein.

Die Kontrolleinheit enthält weiterhin spezielle Software 38 für die Schaltanlage 11, zu der unter anderem die Parameter 37 gehören. Weiterhin gehören dazu die Messwerterfassung 80, bei der Messwerte der Prozessebene 20, die mit einem Zeitstempel versehen sind, in Zeitscheiben eingeordnet werden, die Algorithmus-Programme für die Messwertfunktionen 81, wie z. B. die Effektivwertberechnung von Strom und Spannung, die Algorithmus-Programme für Überwachungsfunktionen 82, bei der ausgewählte Messwerte und/oder Ergebnisse der Messfunktionen angezeigt werden, die Algorithmus-Programme für die Schutzfunktionen 83, wie z. B. Über- und/oder Unterspannungsschutz, die Algorithmus-Programme für die Steuerfunktionen 84, wie z. B. eine Schaltfolgeautomatik und/oder die Algorithmus-Programme für die Regelungsfunktionen 85 wie z. B. Blindleistungsregelung.

In Fig. 4 ist ein schematischer Aufbau eines Prozesskopplers 40 dargestellt. Der Prozesskoppler 40 weist Eingänge 41, von denen hier schematisch nur fünf dargestellt sind, auf, u. a. um Signale der Übertragungsmittel 21, 22, 23, 26 und der Spannungs- und Stromwandler 27, 28 zu empfangen und zu digitalisieren. Hierzu ist beispielsweise ein erster Eingang 41 als ein Strommesser 41.1 und ein zweiter Eingang 41 als ein Spannungsmesser 41.2 ausgebildet. Ein analoger Eingang 41.3 dient zur Erfassung von analogen Signalen und ein binärer Eingang 41.4 zur Erfassung von diskreten Zuständen. Die aktuelle Uhrzeit erhält der Prozesskoppler 40 durch den Zeitgeber 41.5. Der Prozesskoppler weist einen Anti-Alias-Filter 43 auf. Der Strommesser 41.1, der Spannungsmesser 41.2, der analoge Eingang 41.3 und/oder der binäre Eingang 41.4 sind mit einem nicht dargestellten Messwandler ausgestattet.

Der Prozesskoppler 40 weist Ausgänge 42, von denen schematisch nur zwei dargestellt sind, auf, um Signale an die Übertragungsmitteln 21, 22, 23, 26 zu senden. Hierzu sind ein analoger Ausgang 42.1 und ein binärer Ausgang 42.2 vorgesehen. Der Prozesskoppler 40 ist mit handelsüblichen Rechenkernen 44, einem handelsüblichen Speicher 45 und einer handelsüblichen Schnittstelle 46 zum Bussystem 50 ausgestattet. In dem Speicher 45 ist ein handelsübliches Betriebssystem 47 und ein echtzeitfähiges Steuer-Programm 47' für die Schaltanlage 11 hinterlegt. Bei der Messwerterfassung 80' werden die Messwerte der Eingänge 41.1, 41.2, 41.3, 41.4 einer Uhrzeit des Zeitgebers 41.5 versehen und erhalten damit einen Zeitstempel. Der Prozesskoppler 40 weist ferner ein Programm für eine Detektierfunktion 48 auf, mit der die Bandbreite und die Funktionsfähigkeit des Bussystems 50 laufend überprüft werden. Ist die Bandbreite des Bussystems 50 zu gering, so werden Messfunktionen anhand des dazu gespeicherten Algorithmus-Programmes 81, z.B. eine Fastfouriertransformation 81.1 und/oder eine Bestimmung des Phasenwinkels 81.2, durchgeführt. Fällt das Bussystem 50 aus, so werden Schutzfunktionen und/oder Regelungsfunktionen anhand der dazu gespeicherten Algorithmus-Programme 83',85' von dem Prozesskoppler 40 durchgeführt.

### Bezugszeichenliste

- 10: Kontrollsystem
- 11: Schaltanlage
- 12: Feldebene
- 13: Feldgerät
- 14: Bus
- 15: Stationsebene
- 16: Stationsrechner
- 17: Terminal
- 18: Netzleitebene
- 19: Leitwarte

- 20: Prozessebene
- 21: Trenner
- 22: Leistungsschalter
- 23: Transformator
- 24: Abgangsfeld
- 25: Transformatorfeld
- 26: Leitersystem
- 27: Stromwandler
- 28: Spannungswandler

- 30: Kontrolleinheit
- 31: Rechenkerne
- 32: Schnittstelle zur Prozessebene
- 33: Schnittstelle zur Netzleitebene
- 34: Schnittstelle für die Bedienperson
- 35: Speicher
- 36: Betriebssystem
- 36': Steuerprogramm
- 37: Parameter
- 38: spezielle Software
- 40: Prozesskoppler
- 41: Eingänge
- 41.1: Strommesser
- 41.2: Spannungsmesser
- 41.3: analoger Eingang
- 41.4: binärer Eingang
- 41.5: Zeitgeber
- 42: Ausgänge
- 42.1: analoger Ausgang
- 42.2: binärer Ausgang
- 43: Anti-Alias-Filter
- 44: Rechenkern
- 45: Speicher
- 46: Schnittstelle zum Bussystem
- 47, 47': Betriebssystem und Steuerprogramm
- 48: Detektierfunktion

- 50: Bussystem

- 60: Redundanzeinheit
- 61: Einzeladern

- 70: Rechner

- 80, 80': Messwerterfassung
- 81: Algorithmus-Programm für eine Messfunktion
- 82: Algorithmus-Programm für eine Überwachungsfunktion
- 83, 83': Algorithmus-Programm für eine Schutzfunktion
- 84: Algorithmus-Programm für eine Steuerfunktion
- 85, 85': Algorithmus-Programm für eine Regelungsfunktion

## Patentansprüche

1. Kontrollsystem (10), das mindestens als Schutzsystem einer Schaltanlage (11) für ein elektrisches Energiesystem dient,
wobei mit Hilfe des Kontrollsystems (10) mehrere Schutzfunktionen (83, 83') für das elektrische Energiesystem ausführbar sind, um einen sicheren Betrieb des elektrischen Energiesystems zu gewährleisten,
**dadurch gekennzeichnet,**
**dass** das Kontrollsystem (10) mindestens einen Prozesskoppler (40) aufweist, wobei der Prozesskoppler (40) mindestens zu einer Messwertumwandlung, bei der Messwerte des Energiesystems digitalisiert werden, dient,
wobei das Kontrollsystem (10) eine Kontrolleinheit (30) aufweist,
wobei die Kontrolleinheit (30) eine Hardware (31, 32, 33, 34, 35) mit zumindest zwei Rechenkernen (31) zum Ausführen mindestens zweier Schutzfunktionen (83, 83') und mit mindestens einem Speicher (35) aufweist,
und wobei die Kontrolleinheit (30) mit dem Prozesskoppler (40) über ein digitales, echtzeitfähiges Bussystem, z.B. einen ethernet-basierten Feldbus gemäß IEC61850-9-2, verbunden ist,
und in dem Speicher (35) mindestens ein Programm (36, 36', 81, 83) hinterlegt ist, mit dessen Hilfe die Schutzfunktionen echtzeitfähig ausführbar sind,
wobei jeder Kontrollfunktion, unter welcher eine Schutzfunktion, eine Überwachungsfunktion, eine Steuerfunktion oder eine Regelungsfunktion für das elektrische Energiesystem zu verstehen ist, ein oder mehrere Rechenkerne fest zugeordnet sind, wobei jeder einzelnen Kontrollfunktion mindestens ein eigener Rechenkern in der Kontrolleinheit fest zugeordnet ist, wobei ein oder mehrere Rechenkerne ausschließlich für eine Kontrollfunktion bestimmt sind und je ein Algorithmus-Programm im Normalbetrieb für eine Kontrollfunktion fortlaufend auf je einem Rechenkern ausgeführt wird.

2. Kontrollsystem (10) nach Anspruch 1,
**dadurch gekennzeichnet,**
**dass** durch die Kontrolleinheit (30), neben den Schutzfunktionen mindestens eine weitere Kontrollfunktion, wie mindestens eine Überwachungsfunktion, mindestens eine Steuerfunktion und/oder mindestens eine Regelungsfunktion durchführbar ist.

3. Kontrollsystem (10) nach einem der vorhergehenden Ansprüche,
**dadurch gekennzeichnet,**
**dass** nur eine Kontrolleinheit (30) Kontrollfunktionen mehrerer Schaltfelder (24, 25) der Schaltanlage (11) wahrnimmt.

4. Kontrollsystem (10) nach einem der vorhergehenden Ansprüche,
**dadurch gekennzeichnet,**
**dass** Parameter (37) für die Kontrollfunktionen der Schaltanlage (11) in dem Speicher (35) der Kontrolleinheit (30) zum Ausführen von mehreren Kontrollfunktionen zugänglich gespeichert sind.

5. Kontrollsystem (10) nach einem der vorhergehenden Ansprüche,
**dadurch gekennzeichnet,**
**dass** der Prozesskoppler (40), über die Kontrolleinheit (30) parametrierbar ist.

6. Kontrollsystem (10) nach einem der vorhergehenden Ansprüche,
**dadurch gekennzeichnet,**
**dass** jedem Schaltfeld (24, 25) der Schaltanlage (11) mindestens ein Prozesskoppler (40) zugeordnet ist.

7. Kontrollsystem (10) nach einem der vorhergehenden Ansprüche,
**dadurch gekennzeichnet,**
**dass** der Prozesskoppler (40) und die Kontrolleinheit (30) über mehrere Bussysteme verbunden sind, wobei ein Bussystem redundant vorhanden ist.

8. Kontrollsystem (10) nach einem der vorhergehenden Ansprüche,
**dadurch gekennzeichnet,**
**dass** der Prozesskoppler (40) zu einer Messwerterfassung (80'), bei der die Messwerte mit einem Zeitstempel versehen werden, dient.

9. Kontrollsystem (10) nach einem der vorhergehenden Ansprüche,
**dadurch gekennzeichnet,**
**dass** in dem Prozesskoppler (40) mindestens eine Messfunktion für das zugeordnete Schaltfeld (24, 25) ausführbar ist.

10. Kontrollsystem (10) nach einem der vorhergehende Ansprüche,
**dadurch gekennzeichnet,**
**dass** der Prozesskoppler (40) mindestens einen Rechenkern (44) und einen Speicher (45) aufweist, und in dem Speicher (45) ein echtzeitfähiges Programm (47, 47', 80', 83', 85') für die die Ausführung der Messfunktion hinterlegt ist.

11. Kontrollsystem (10) nach einem der vorhergehenden Ansprüche,
**dadurch gekennzeichnet,**
**dass** in dem Prozesskoppler (40) eine Detektierfunktion (48) gespeichert ist, durch die eine Beeinträchtigung des Bussystems (50) oder der Kontrolleinheit (30) überwachbar sind, wobei bei der Beeinträchtigung der Prozesskoppler (40) die Messfunktion selber ausführt.

12. Kontrollsystem (10) nach einem der vorhergehenden Ansprüche,
**dadurch gekennzeichnet,**
**dass** die Kontrolleinheit (10) einen Zwischenspeicher aufweist, in dem die von dem Prozesskoppler (40) an die Kontrolleinheit (10) übertragenen Messwerte derart zwischengespeichert werden, dass zur Durchführung verschiedener Kontrollfunktionen in der Kontrolleinheit (10) ein Zugriff auf den Zwischenspeicher möglich ist.

13. Kontrollsystem (10) nach einem der vorhergehenden Ansprüche,
**dadurch gekennzeichnet,**
**dass** das Kontrollsystem (10) eine Redundanzeinheit (60) aufweist, die funktional identisch zur Kontrolleinheit (30) ist, den Betrieb der Kontrolleinheit (30) überwacht, und, wenn die Kontrolleinheit (30) ausfällt, die Aufgaben der Kontrolleinheit (30) übernimmt.

14. Verfahren zur Gewährleistung eines sicheren Betriebes eines elektrischen Energiesystems,
wobei mehrere Schutzfunktionen für das elektrische Energiesystem durch ein Kontrollsystem (10) mit den Merkmalen eines der Ansprüche 1 bis 13 einer Schaltanlage (11) ausführbar sind,
wobei mindestens zwei Schutzfunktionen auf mindestens zwei Rechenkernen (31) einer Kontrolleinheit (30) des Kontrollsystems (10) mit Hilfe mindestens eines auf der Kontrolleinheit (30) hinterlegten Programmes (36, 36', 81, 83) echtzeitfähig ausführbar sind,
wobei jeder Kontrollfunktion, unter welcher eine Schutzfunktion, eine Überwachungsfunktion, eine Steuerfunktion oder eine Regelungsfunktion für das elektrische Energiesystem zu verstehen ist, ein oder mehrere Rechenkerne fest zugeordnet sind,
wobei jeder einzelnen Kontrollfunktion mindestens ein eigener Rechenkern in der Kontrolleinheit fest zugeordnet ist.

## Claims

1. Control system (10), which is used at least as a protection system for a switchgear system (11) for an electrical energy system,
wherein by means of the control system (10), a plurality of safety functions (83, 83') for the electrical energy system can be executed, in order to ensure safe operation of the electrical energy system,
**characterized in that**
the control system (10) comprises at least one process coupler (40), wherein said process coupler (40) is used at least for a measurement conversion process in which the measurements of the energy system are digitised, wherein the control system (10) comprises a control unit (30),
wherein the control unit (30) comprises hardware (31, 32, 33, 34, 35) having at least two computing kernels (31) for executing at least two safety functions (83, 83'), and having at least one memory (35),
and wherein the control unit (30) is connected to the process coupler (40) via a digital, real-time-enabled bus system, e.g. an Ethernet-based field bus conforming to IEC61850-9-2,
and in the memory (35) at least one program (36, 36', 81, 83) is stored, by means of which the safety functions can be executed with real-time capability, wherein to each control function, which is defined as a safety function, a monitoring function, a control function or a regulating function for the electrical energy system, one or more computing kernels is permanently assigned, wherein at least one dedicated computing kernel is assigned to each individual control function in the control unit, one or more computing kernels being allocated to one control function and in normal operation in each case one algorithm program for a control function being executed continuously on one computing kernel.

2. Control system (10) according to Claim 1,
**characterized in that**
in addition to the safety functions, the control unit (30) can carry out at least one further control function, such as at least one monitoring function, at least one control function and/or at least one regulating function.

3. Control system (10) according to any one of the previous claims,
**characterized in that**
only one control unit (30) assumes responsibility for control functions of a plurality of switching panels (24, 25) of the switchgear system (11).

4. Control system (10) according to any one of the previous claims,
**characterized in that**
parameters (37) for the control functions of the switchgear (11) are stored in the memory (35) of the control unit (30) and can be accessed for executing a plurality of control functions.

5. Control system (10) according to any one of the previous claims,
**characterized in that**
the process coupler (40) can be parameterized using the control unit (30).

6. Control system (10) according to any one of the previous claims,
**characterized in that**
at least one process coupler (40) is assigned to each switching panel (24, 25) of the switchgear (11).

7. Control system (10) according to any one of the previous claims,
**characterized in that**
the process coupler (40) and control unit (30) are connected via a plurality of bus systems, wherein one bus system is redundantly present.

8. Control system (10) according to any one of the previous claims,
**characterized in that**
the process coupler (40) is used for measurement acquisition (80'), in which the measured values are provided with a time stamp.

9. Control system (10) according to any one of the previous claims,
**characterized in that**
at least one measuring function for the assigned switching panel (24, 25) can be executed in the process coupler (40).

10. Control system (10) according to any one of the previous claims,
**characterized in that**
the process coupler (40) comprises at least one computing kernel (44) and a memory (45), and a real-time-enabled program (47, 47', 80', 83", 85") for executing the measuring function is stored in the memory (45).

11. Control system (10) according to any one of the previous claims,
**characterized in that**
a detection function (48) is stored in the process coupler (40), which can monitor any malfunction of the bus system (50) or the control unit (30), wherein in the event of a malfunction the process coupler (40) executes the measuring function itself.

12. Control system (10) according to any one of the previous claims,
**characterized in that**
the control unit (10) comprises a memory buffer, in which the measurement values transferred by the process coupler (40) to the control unit (10) are temporarily stored in such a way that access to the memory buffer is possible for performing different control functions in the control unit (10).

13. Control system (10) according to any one of the previous claims,
**characterized in that**
the control system (10) comprises a redundancy unit (60), which is functionally identical to the control unit (30), monitors the operation of the control unit (30) and, if the control unit (30) fails, performs the tasks of the control unit (30).

14. Method for ensuring a safe operation of an electrical energy system,
wherein a plurality of safety functions for the electrical energy system can be executed by a control system (10) having the features of Claims 1 to 13 of a switchgear system (11),
wherein at least two safety functions are executable with real-time capability on at least two computing kernels (31) of a control unit (30) of the control system (10) by means of at least one program (36, 36, 81, 83) stored on the control unit (30),
wherein to each control function, which is defined as a safety function, a monitoring function, a control function or a regulating function for the electrical energy system, one or more computing kernels are permanently assigned, wherein at least one dedicated computing kernel in the control unit is permanently assigned to each individual control function.

## Revendications

1. Système de contrôle (10) qui sert au moins de système de protection d'une installation de commutation (11) pour un système d'énergie électrique,
plusieurs fonctions de protection (83, 83') pour le système d'énergie électrique étant exécutables à l'aide du système de contrôle (10) pour garantir un fonctionnement sûr du système d'énergie électrique,
**caractérisé en ce**
**que** le système de contrôle (10) présente au moins un coupleur de processus (40), lequel coupleur de processus (40) sert au moins à une transformation de valeurs de mesure lors de laquelle des valeurs de mesure du système d'énergie sont numérisées,
le système de contrôle (10) présentant une unité de contrôle (30),
laquelle unité de contrôle (30) présente un matériel (31, 32, 33, 34, 35) comprenant au moins deux coeurs de calcul (31) pour exécuter au moins deux fonctions de protection (83, 83') et au moins une mémoire (35),
et laquelle unité de contrôle (30) est reliée au coupleur de processus (40) par un système de bus numérique pouvant fonctionner en temps réel, par exemple un bus de terrain basé sur Ethernet selon IEC 61850-9-2,
et au moins un programme (36, 36', 81, 83) étant stocké dans la mémoire (35), à l'aide duquel les fonctions de protection peuvent être exécutées en temps réel, un ou plusieurs coeurs de calcul étant associés de manière fixe à chaque fonction de contrôle, par laquelle il faut entendre une fonction de protection, une fonction de surveillance, une fonction de commande ou une fonction de régulation pour le système d'énergie électrique, au moins un coeur de calcul distinct étant associé de manière fixe à chaque fonction de contrôle individuelle dans l'unité de contrôle, un ou plusieurs coeurs de calcul étant destinés exclusivement à une fonction de contrôle et, en fonctionnement normal, chaque fois un programme algorithmique pour une fonction de contrôle étant exécuté en continu sur chaque fois un coeur de calcul.

2. Système de contrôle (10) selon la revendication 1,
**caractérisé en ce**
**que** l'unité de contrôle (30), en plus des fonctions de protection, peut réaliser au moins une autre fonction de contrôle, comme au moins une fonction de surveillance, au moins une fonction de commande et/ou au moins une fonction de régulation.

3. Système de contrôle (10) selon l'une des revendications précédentes,
**caractérisé en ce**
**qu'**une seule unité de contrôle (30) assume les fonctions de contrôle de plusieurs, panneaux de commutation (24, 25) de l'installation de commutation (11).

4. Système de contrôle (10) selon l'une des revendications précédentes,
**caractérisé en ce**
**que** des paramètres (37) pour les fonctions de contrôle de l'installation de commutation (11) sont enregistrés de manière accessible dans la mémoire (35) de l'unité de contrôle (30) pour l'exécution de plusieurs fonctions de contrôle.

5. Système de contrôle (10) selon l'une des revendications précédentes,
**caractérisé en ce**
**que** le coupleur de processus (40) est paramétrable par l'unité de contrôle (30).

6. Système de contrôle (10) selon l'une des revendications précédentes,
**caractérisé en ce**
**qu'**au moins un coupleur de processus (40) est associé à chaque panneau de commutation (24, 25) de l'installation de commutation (11).

7. Système de contrôle (10) selon l'une des revendications précédentes,
**caractérisé en ce**
**que** le coupleur de processus (40) et l'unité de contrôle (30) sont reliés par plusieurs systèmes de bus, un système de bus étant présent de manière redondante.

8. Système de contrôle (10) selon l'une des revendications précédentes,
**caractérisé en ce**
**que** le coupleur de processus (40) sert à une détection de valeurs de mesure (80') lors de laquelle les valeurs de mesure sont munies d'une estampille horaire.

9. Système de contrôle (10) selon l'une des revendications précédentes,
**caractérisé en ce**
**qu'**au moins une fonction de mesure pour le panneau de commutation (24, 25) associé peut être exécutée dans le coupleur de processus (40).

10. Système de contrôle (10) selon l'une des revendications précédentes,
**caractérisé en ce**
**que** le coupleur de processus (40) présente au moins un coeur de calcul (44) et une mémoire (45), et un programme pouvant fonctionner en temps réel (47, 47', 80', 83', 85') pour l'exécution de la fonction de mesure est stocké dans la mémoire (45).

11. Système de contrôle (10) selon l'une des revendications précédentes,
**caractérisé en ce**
**que** dans le coupleur de processus (40) est enregistrée une fonction de détection (48) qui permet de surveiller une perturbation du système de bus (50) ou de l'unité de contrôle (30), le coupleur de processus (40) exécutant la fonction de mesure lui-même en cas de perturbation.

12. Système de contrôle (10) selon l'une des revendications précédentes,
**caractérisé en ce**
**que** l'unité de contrôle (10) présente une mémoire tampon, dans laquelle les valeurs de mesure transmises par le coupleur de processus (40) à l'unité de contrôle (10) sont mises en mémoire tampon de façon qu'un accès à la mémoire tampon soit possible pour réaliser différentes fonctions de contrôle dans l'unité de contrôle (10).

13. Système de contrôle (10) selon l'une des revendications précédentes,
**caractérisé en ce**
**que** le système de contrôle (10) présente une unité de redondance (60) qui est fonctionnellement identique à l'unité de contrôle (30), surveille le fonctionnement de l'unité de contrôle (30) et, si l'unité de contrôle (30) tombe en panne, assume les tâches de l'unité de contrôle (30).

14. Procédé pour garantir un fonctionnement sûr d'un système d'énergie électrique, selon lequel plusieurs fonctions de protection pour le système d'énergie électrique sont exécutables par un système de contrôle (10) présentant les caractéristiques d'une des revendications 1 à 13 d'une installation de commutation (11),
selon lequel au moins deux fonctions de protection sont exécutables en temps réel sur au moins deux coeurs de calcul (31) d'une unité de contrôle (30) du système de contrôle (10) à l'aide d'au moins un programme (36, 36', 81, 83) stocké sur l'unité de contrôle (30),
un ou plusieurs coeurs de calcul étant associés de manière fixe à chaque fonction de contrôle, par laquelle il faut entendre une fonction de protection, une fonction de surveillance, une fonction de commande ou une fonction de régulation pour le système d'énergie électrique,
au moins un coeur de calcul distinct étant associé de manière fixe à chaque fonction de contrôle individuelle dans l'unité de contrôle.
